# EUROPEAN PATENT SPECIFICATION

(11) **EP 3 646 457 B1**
(45) Date of publication and mention of the grant of the patent: **26.01.2022**
(21) Application number: 18739591.8
(22) Date of filing: 28.06.2018
(51) Int. Cl.: H02N 1/00

(54) **ELECTROSTATIC ACTUATOR**
ELEKTROSTATISCHER AKTUATOR
ACTIONNEUR ÉLECTROSTATIQUE

(30) Priority: 29.06.2017 GB 201710400
(43) Date of publication of application: 06.05.2020
(73) Proprietor: The University of Bristol, Bristol BS8 1TH (GB)
(72) Inventor: TAGHAVI, Majid, Bristol BS8 1TH (GB); HELPS, Tim, Bristol BS8 1TH (GB); ROSSITER, Jonathan, Bristol BS8 1TH (GB)
(74) Representative: Latham, Stuart Alexander
(86) International application number: PCT/GB2018/051799
(87) International publication number: WO 2019/002860

(56) References cited:
- US-A1- 2005 067 919

## Description

### BACKGROUND

Actuators (such as motors and muscles) are devices which exert force and do work, allowing man-made and natural systems to perform useful tasks.

A tensile actuator exerts a contractile force when active and therefore shortens when doing work. The contractile strain of such an actuator can be described as the difference between its initial and final length divided by the initial length. Many known tensile actuators achieve strains less than or equal to 50% i.e. a halving of length when actuated, which restricts their usefulness. Single layers of dielectric elastomer actuators (DEAs) can achieve thickness strains of 79%, but when stacked in useful, multilayer structures, have only reached strains of 46%. Higher strains may be achieved by thermally driven actuation technologies, such as shape-memory polymer, shape-memory alloy coil and coiled polymer. However, because of their thermal nature, such actuators can be energetically inefficient in that less than 10% of input thermal energy is converted to mechanical energy. Such actuators can also be fundamentally limited in bandwidth due to thermal inertia.

The present inventors have devised a new type of simple, low cost, lightweight, efficient, energetic and scalable tensile actuator, with contractile strains which can exceed 99.8%.

US 2005/067919 describes a polymer actuator having a circular unit cell

### SUMMARY

In accordance with a first aspect of the present invention, there is provided an electrostatic actuator according to claim 1.

Thus, an electrostatic actuator according to the first aspect of the invention includes a mobile dielectric within the zipping crevice which amplifies the electrostatic force between the electrodes in the region of the zipping crevice. This results in the electrodes 'zipping' together to shorten the actuator through an interplay of the high permittivity mobile dielectric and pull-in instability arising from flexing or rolling movement of the second electrode (and in some embodiments also flexing of the first electrode) during zipping closure. Advantageously, dielectrophoresis draws the mobile dielectric towards the zipping locus, which can increase the magnitude of the closing force. This can result in a simple, low cost, lightweight, efficient, energetic and scalable actuator with contractile strains which can exceed 99.8 %. The high strains achievable make actuators according to the first aspect of the invention particularly suitable for application in robotics, engineering, automotive and transport industries.

A flexible electrode can alternatively or in addition be compressible or extensible; for example, the electrode can be formed from a conductive gel, carbon foam or carbon impregnated compressible material such as a rubber polymer like neoprene.

The mobile dielectric can be a liquid dielectric. Electrostatic force is proportional to the inverse of electrode spacing squared. As such, the greatest forces are at the very corner of the crevice i.e. the zipping locus. Advantageously, dielectrophoresis can cause the liquid dielectric to be drawn into the zipping crevice closer to the zipping locus than would be possible with a solid dielectric, which can increase the magnitude of the closing force in comparison to a solid mobile dielectric.

The liquid dielectric can be a bead of liquid dielectric provided at least within the zipping crevice and in some embodiments just within the zipping crevice. A bead of dielectric can be defined as a quantity of dielectric that is sufficient to bridge the electrodes while situated within the zipping crevice and continue to do so as the electrodes zip closed. Advantageously, a bead of dielectric remains within the zipping crevice due to dielectrophoresis and/or surface tension. This can result in a relatively lightweight and simple actuator in comparison to an actuator which relies on the electrodes being submerged in a container of liquid dielectric.

The liquid dielectric can be a type of oil, such as silicone oil, mineral oil, castor oil, or vegetable oil, or for example liquid gas such as oxygen, nitrogen, hydrogen, helium or argon.

The electrodes or insulator(s) can comprise one or more reservoirs or recesses for the mobile dielectric to move into as the second electrode assumes the relatively close position as the actuator shortens. When the mobile dielectric is a liquid, one or both electrodes and/or insulator layer(s) can include a porous reservoir region arranged to absorb and/or house the liquid as the electrodes zip together. In some embodiments, the reservoir region(s) can extend along the zipping locus path so as to be able to supply liquid dielectric to the zipping locus throughout some or all of the zipping process as the electrodes zip together. At least some of the reservoir can be defined by surface roughness or nano/micro patterns of the electrodes and/or insulator, which can synergistically increase the electrostatic closing force.

The insulator can be provided within the movement volume between the electrodes. In such embodiments, the first distance of the second electrode from the first electrode can be defined by the thickness of the insulator. Put another way, the insulator can mechanically limit relative proximity between the electrodes. The insulator can comprise one or more layers of insulating material attached, directly or indirectly, to one or both of the electrodes by any suitable means so that the one or more layers of insulating material remain between the electrodes as the actuator zips closed. It is preferred that at least one of the electrodes is encapsulated or at last one layer of insulating material is wider than the electrodes to inhibit arcing between the electrodes as they move towards one another. The insulating layer(s) can be of uniform thickness and have straight surfaces to aid in movement of the mobile dielectric within the zipping crevice as it propagates along the actuator. In any embodiment, the insulator can for example be formed from a plastics material.

Alternatively or in addition, a plurality of bumps or ridges can serve as a mechanical movement limiter; for example, electrode movement can be limited by insulating bumps between the electrodes such the electrodes are mechanically separated and do not touch as they zip together.

Alternatively or in addition, the insulator can be defined by magnets provided on the electrodes which repel one another to inhibit electrostatic attraction moving the actuators closer to one another than the first distance. A single magnet can extend along each electrode, or a plurality of discrete magnets can be positioned along each electrode to act upon one another when the electrodes approach the first distance from one another.

Alternatively or in addition, the insulator can comprise a mechanical movement limiter; for example, electrode movement can be retrained by flexible but non-extensible tethers anchored to structures such as opposing walls of an actuator casing.

The electrodes of actuators according to embodiments of the invention can have various shapes.

The second electrode can be coupled to the first electrode via a second electrode coupling, the second electrode coupling defining a second zipping crevice at a region where the second electrode transitions from being at the first distance from the first electrode defined by the thickness of the insulator to the second distance which is greater than the first distance, wherein the actuator further comprises a second mobile dielectric located within the second zipping crevice to increase the field force between the electrodes in the region of the second zipping crevice, the second mobile dielectric being arranged to be moved with the second zipping crevice as it propagates along the actuator due to flexing or moving of the second electrode towards the first electrode.

The second electrode coupling can be located so as to define the free portion of the second electrode between the first and second electrode couplings. Put another way, the actuator can be arranged such that, upon application of a voltage, the first mobile dielectric and second mobile dielectric move along the electrodes toward one another. Such embodiments define a 'bow shaped' actuator where the contraction force is applied at the centre of the electrodes.

The first electrode can also be formed from a flexible material. Advantageously, this can result in a high stroke actuator.

The first and/or second electrodes can each have a plate-like configuration having flat major surfaces or largest area separated by relatively small area sidewalls and end walls.

The electrodes can be ribbon like, e.g. having a width which is less than half of their length.

Alternatively, the electrodes can be square like, e.g. having a width which is at least half of their length.

The electrode couplings can be arranged to constrain movement of the electrodes so that when the electrodes are in the relatively close position the major faces are aligned and face one another in a generally parallel relationship.

The second electrode can have a corrugated or undulatory shape, while the first electrode has a relatively planar shape. The regions where the electrodes are closest together define coupling regions from which zipping loci propagate as the second electrode is drawn towards the first electrode in a one dimensional manner.

The second electrode can have one or more semi spherically shaped regions while the first electrode has a relatively planar shape. The regions where the electrodes are closest together define coupling regions from which zipping loci propagate as the second electrode is drawn towards the first electrode in a radially extending, circular, two dimensional manner.

Thus, in embodiments where the second electrode is shaped to define one or more bowl or dome shaped regions, one or more annular zipping crevices with circular or generally circular zipping loci are defined which zip radially inwardly or outwardly in response to an applied voltage.

In other embodiments the actuator can be arranged for rotating movement. The second electrode coupling can be located so as to define a mandrel region between the first and second electrode couplings. Upon application of a voltage, the electrodes do not zip together in the mandrel region. Free portions of the second electrode exists either side of the mandrel region. Upon application of a voltage, the first mobile dielectric and second mobile dielectric move along the second electrode away from the mandrel region. Such embodiments can define a "X' shaped actuator where the contraction force is applied at both ends of the electrodes. Thus, as the electrodes zip together they wind around the mandrel region, which can be a sphere, cylinder, box section the like.

The mandrel region can be defined by the stiffness of the electrodes at that region.

The actuator can further comprise a mandrel located within the mandrel region with the first electrode extending around one side of the mandrel and the second electrode extending around the opposite side of the mandrel, with the first and second electrode couplings being between free portions of the first and second electrodes.

In such embodiments, one or both of the distal or far ends of the electrodes relative to the electrode couplings can be anchored to external structures that allow the distal end regions to move toward one another. Thus, application of a voltage causes the electrodes to zip together at diametrically opposite sides of the mandrel, with the first and second zipping loci moving around the mandrel in the same direction (clockwise or anticlockwise). The rotating mandrel can be used as a rotary actuator.

In other embodiments, the first electrode can be relatively rigid in comparison to the second electrode and can define a mandrel. The second electrode can be coupled to the mandrel in an orientation that is non-orthogonal with respect to a rotational axis of the mandrel. Thus, the second electrode can wind helically around the mandrel as it zips closed. A first end of the second electrode can be anchored to a structure that inhibits movement of the first end along the axis of rotation of the mandrel. The second end of the second electrode is permitted to move along the axis of rotation of the mandrel. As such, zipping closure of the helical electrode drives the mandrel axially as well as rotationally.

The first electrode can comprise a first actuator end connector arranged to be coupled to an external structure such as a part to be driven by the actuator, which could be another actuator according to the first aspect. Likewise, the second electrode can comprise a second actuator end connector.

When the actuator is configured as a tensile actuator, which under zero voltage is free to extend to a maximum length due to an external force such as gravity, the first and second end connectors can be at opposite end regions of the first and second electrodes respectively, with reference to the first coupling between the electrodes. The further the distance between the first coupling and the first and second end connectors, the longer the stroke of the tensile actuator. In embodiments where a second coupling is provided, in order to arrange the electrodes as a bow shaped actuator, the first and second end connectors can be located midway along the electrodes, preferably equidistant between the first and second electrode couplings.

One or more of the electrodes can be partitioned into a plurality of electrically isolated zones which can be selectively powered to attract the energised zones to the opposing electrode. The zones can extend along the zipping path between the electrodes. In such embodiments, one electrode can have an arcuate in shape, such as circular, to cause the second electrode to roll along the first electrode.

In accordance with a second aspect of the present invention, there is provided an assembly comprising a plurality of actuators according to the first aspect arranged in series and/or parallel.

An assembly can for example comprise a corrugated or undulatory second electrode layer sandwiched between a pair of first electrode and insulator layers. Further alternating layers of second and first electrodes can be provided to increase the thickness of the assembly.

### BRIEF DESCRIPTION OF THE DRAWINGS

Figure 1 is a perspective diagram of an electrostatic actuator according to a first embodiment of the present invention in an open or extended condition;
Figure 2 is a side view of the electrostatic actuator of Figure 1;
Figure 3 is a side view of the electrostatic actuator of Figure 1 in a closed or shortened condition;
Figure 4 is a perspective diagram of an electrostatic actuator according to a further embodiment of the present invention in an open or extended condition;
Figure 5 is a side view diagram of an electrostatic actuator according to a further embodiment of the present invention in an open or extended condition;
Figure 6 is a side view of the electrostatic actuator of Figure 5 in a closed or shortened condition;
Figure 7 is a side view diagram of an electrostatic actuator according to a further embodiment of the present invention in an open or extended condition;
Figure 8 is a side view of the electrostatic actuator of Figure 5 in a closed or shortened condition;
Figure 9 is a cross section diagram of an electrostatic actuator according to a further embodiment of the present invention in an open or extended condition;
Figure 10 is a plan view of the electrostatic actuator of Figure 9;
Figure 11 is a cross section diagram of an electrostatic actuator according to a further embodiment of the present invention in an open or extended condition;
Figure 12 is a plan view of the electrostatic actuator of Figure 11;
Figure 13 is a cross section diagram of an electrostatic actuator according to a further embodiment of the present invention in an open or extended condition;
Figure 14 is a cross section diagram of the electrostatic actuator of Figure 13 in a contracted condition;
Figure 15 is a cross section diagram of an electrostatic actuator according to a further embodiment of the present invention in an open or extended condition;
Figure 16 is a cross section diagram of the electrostatic actuator of Figure 15 in a contracted condition;
Figure 17 is a perspective diagram of a multilayer electrostatic actuator according to a further embodiment of the present invention in an open or extended condition;
Figure 18 is a perspective diagram of a multilayer electrostatic actuator according to a further embodiment of the present invention in an open or extended condition; and
Figure 19 is a cross section diagram of a zonal electrostatic actuator according to a further embodiment of the present invention in an open or extended condition.

### SPECIFIC DESCRIPTION

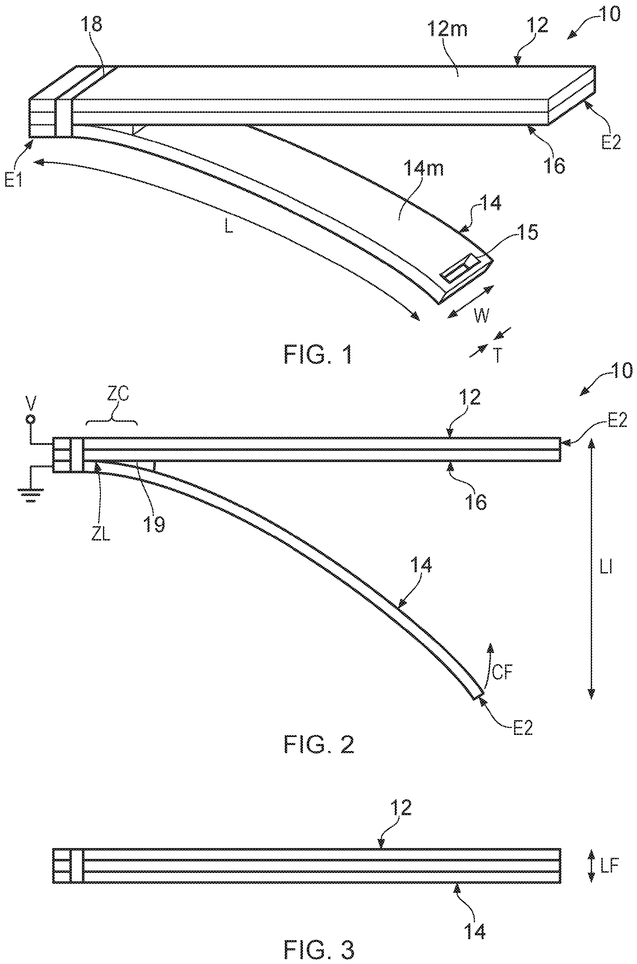

Figure 1 shows a tensile, electrostatic actuator according to an embodiment of the invention generally at 10.

The actuator 10 has a zipping structure with a first, plate-like, ribbon electrode 12 arranged in parallel with a second, plate-like, ribbon electrode 14 separated by an insulator 16 arranged to limit proximity between the electrodes 12, 14.

In the illustrated embodiment, the insulator 16 consists of a single layer of insulating material 16 that is attached to the first electrode 12 by any suitable means such as bonding or mechanical fixings. However, in other embodiments, the insulator can comprise any arrangement which prevents electrical coupling between the electrodes 12, 14; for example, one or more insulating layers provided between to the first electrode 12 and the second electrode 14, magnets provided on the electrodes which repel one another, or a mechanical movement limiter arranged to limit proximity between the electrodes 12, 14.

The electrodes 12, 14 are mechanically coupled together at a first end E1 of the actuator 10 by a first coupling which in this embodiment is a mechanical collar 18 that holds the major surfaces 12M, 14M of the electrodes 12, 14 in a parallel relationship at the first end E1. As will be appreciated, the electrodes 12, 14 and the layer of insulating material 16 each have a corresponding first end E1 and opposite second end E2.

In this embodiment, the second ends E2 of the electrodes 12, 14 can be attached to external parts to be actuated (not shown) for example, by way of mechanical fixings. Any suitable means can be provided to couple actuators according to embodiments of the invention to external parts to be actuated.

In this embodiment, at least the second electrode 14 is flexible. In other embodiments, both electrodes 12, 14 can be flexible to increase the initial length LI of the actuator. Also, as described in more detail below, in other embodiments one electrode can be arranged to move relative to the other in a non-flexing manner.

The collar 18 positionally restrains a fixed portion of the second electrode 14 relative to the first electrode 12 and defines a free portion of the second electrode 14 that can move through a movement volume between a relatively spaced position, as shown in Figures 1 and 2, and a relatively close position with respect to the first electrode 12, as illustrated in Figure 3.

In the illustrated embodiment the majority of the second electrode, including the second end E2, is free to move. Thus, with the actuator 10 orientated with the second electrode 14 below the first electrode 12, gravity can cause the second end E2 of the second electrode 14 to separate from the first electrode 12 to define an initial actuator length LI illustrated in Figure 2.

As will be appreciated, electrostatic actuators function due to the attraction of static opposite charges, and have the potential to exert extremely large forces. Thus, application of a voltage across the electrodes 12, 14 causes electrostatic attraction between the electrodes 12, 14, causing the second electrode 14 to flex towards the first electrode 12 resulting in a zipping closure of the actuator 10 from the first end E1 to the second end E2. This results in a contractile force CF at the second end E2 of the actuator 10.

The insulator 16 is arranged to inhibit electrical coupling between the electrodes 12, 14 when the second electrode 14 is in the relatively close position, illustrated in Figure 3. As can be seen, the final length LF of the actuator 10 is a product of the thickness of the two electrodes 12, 14 and the thickness of the insulator 16.

Referring back to Figure 2, the collar 18 defines a zipping crevice ZC at a region where the second electrode 14 transitions from both electrodes 12, 14 being in contact with the insulator 16 to just the first electrode 12 being in contact with the insulator 16. Put another way, the zipping crevice ZLC can be considered to be a portion of free space between the electrodes 12, 14 adjacent to the corner of the zipping structure. The origin of the zipping crevice i.e. the point where the electrodes 12, 14 are closest together will be referred to as the zipping locus ZL.

In other embodiments in which the insulator is not defined by a layer between the electrodes, the first coupling can define a first zipping crevice at a region where the second electrode transitions from being at a first distance from the first electrode defined by the insulator, to a second distance which is greater than the first distance.

The electric field generated at the zipping locus ZL is extremely large due to charge proximity i.e. electrode separation. A mobile dielectric 19 is provided within the zipping crevice ZC to increase the field force between the electrodes 12, 14 in the region of the zipping crevice ZC. The mobile dielectric 19 considerably amplifies the electrostatic closing force due to induced polarisation of the mobile dielectric 19. In the illustrated embodiment, polarisation of the insulating layer also increases electrostatic force. The actuator 10 zips together under the amplified contraction force and the zipping locus ZL and therefore the zipping crevice ZC shifts along the actuator 10 along a zipping path toward the second end E2. In the illustrated embodiment the zipping path is linear i.e. one dimensional; however, in other embodiments described later the zipping path can be two dimensional such as radial. The mobile dielectric 19 is arranged to move with the zipping crevice ZC as it propagates along the actuator 10 due to flexing of the second electrode 14 towards the first electrode 12. In this way, a high contracting force is generated throughout actuator stroke.

In the illustrated embodiment the mobile dielectric 19 consists of a small bead of high permittivity liquid dielectric 19. Advantageously, the liquid bead 19 is kept exactly at the zipping locus ZL by dielectrophoretic (DEP) force, which has the effect of drawing high permittivity fluids into regions of high electric field density. Surface tension also helps to keep the liquid bead in the zipping crevice ZC. One or both of the electrodes and/or insulator can include a recess 15 which serves as a reservoir that the liquid bead 19 can move into when the actuator 10 has closed, as shown in Figure 3. In some embodiments the recess can be in the form of a crevice which extends along the entire length of the second electrode 14 to make it easier for liquid dielectric 19 to migrate back to the zipping crevice ZC of the opened actuator upon reapplication of voltage.

In other embodiments, rather than applying a bead of high permittivity liquid dielectric at the zipping locus ZL, some or all of the actuator can be submerged in high permittivity liquid dielectric; for example, some or all of the actuator can be encased in a liquid tight casing, optionally with ports to enable external parts to couple to the first and second electrodes.

In other embodiments the mobile dielectric 19 can consist of a wedge shaped piece of dielectric material that conforms in shape with respect to the zipping crevice ZC and can be pushed along as the actuator closes. Again, a recess can be provided to accommodate the dielectric wedge when the actuator closes.

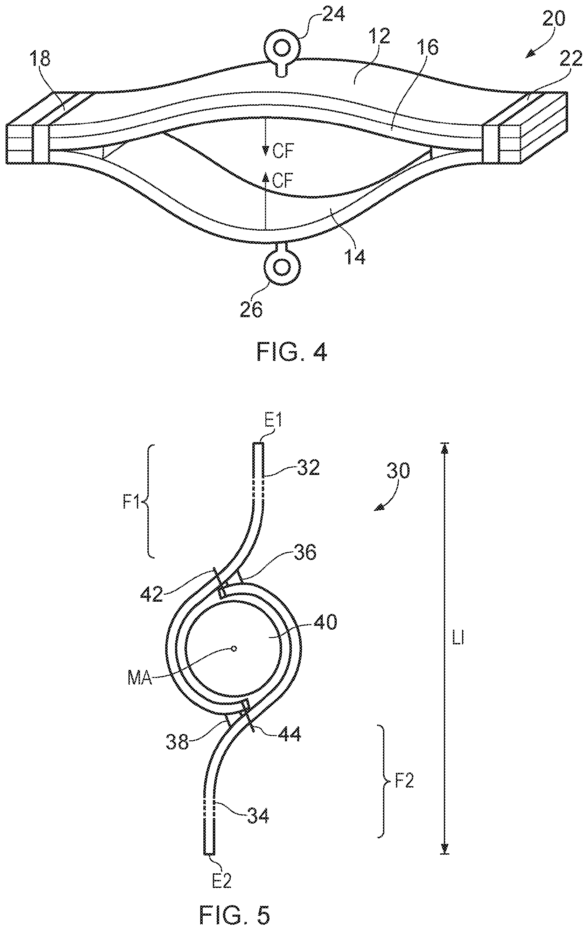

Referring now to Figure 4, an electrostatic actuator according to a second embodiment of the invention is shown generally at 20. The actuator 20 of this embodiment is similar to the actuator 10 of the first embodiment. As such, for brevity, the following description will focus on the differences.

The actuator 20 of the second embodiment includes a second coupling 22 defined by a second collar 22 which positionally restrains the second end E2 of the second electrode 14 relative to the first electrode 12 in an analogous fashion with respect to the collar 18 of the first embodiment. Thus, the second coupling 22 is located so as to define the free portion of the second electrode 14 between the first 18 and second 22 electrode couplings. Such embodiments define a 'bow shaped' actuator where the contraction force CF is applied at the centre of the actuator 20. Eyelet hooks 24, 26 or other suitable end connectors are provided on the outward facing major faces at the centres of the electrodes 12, 14 for coupling to external parts to be actuated (not shown).

Referring now to Figure 5, an electrostatic actuator according to a third embodiment of the invention is shown generally at 30. The actuator 30 of this embodiment is similar to the actuator 20 of the second embodiment. As such, for brevity, the following description will focus on the differences.

The actuator 30 comprise a cylindrical mandrel 40 located between the first and second electrode couplings 42, 44 with the first electrode 32 extending around one side of the mandrel 40 and the second electrode 34 extending around the opposite side of the mandrel 40. The mandrel can take any suitable shape that the electrodes can wind around, such as spherical, rectangular, etc. In other embodiments the electrodes 42, 44 can be bent to define a mandrel shape at the mandrel region. The first and second electrode couplings 42, 44 sit between free portions F1, F2 of the first and second electrodes 32, 34. Thus, as the electrodes 32, 34 zip together from the zipping loci 36, 38, they wind around the mandrel 40 to draw in the free ends E1, E2 of the electrodes toward one another to shorten the actuator 30 from its initial length LI. One or both of the distal, free ends E1, E2 of the electrodes 32, 34 can be anchored to external structures (not shown) that allow the distal ends E1, E2 to move toward one another.

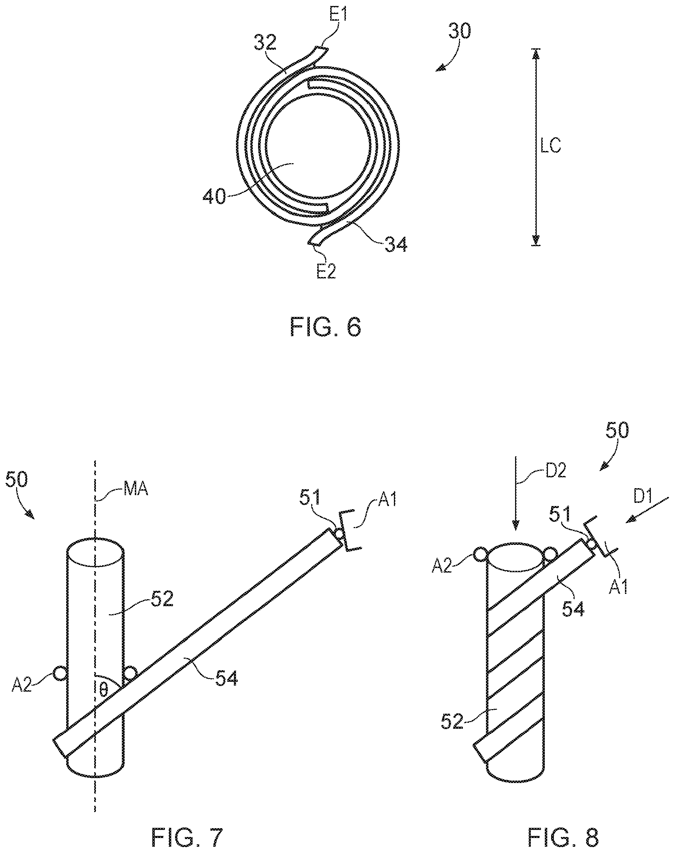

Application of a voltage causes the electrodes 32, 34 to zip together at diametrically opposite sides of the mandrel 40, with the first and second zipping loci 36, 38 moving around the mandrel 40 in the same direction (clockwise in this case) until the actuator reaches a contracted length LC as shown in Figure 6.

If the free ends E1, E2 of the electrodes 32, 34 define the actuator connection points then the actuator 30 is a tensile actuator. The rotating mandrel 40 can be used as a rotary actuator.

Referring now to Figure 7, an electrostatic actuator according to a fourth embodiment of the invention is shown generally at 50. The actuator 50 of this embodiment is similar to the actuator 30 of the third embodiment. As such, for brevity, the following description will focus on the differences.

The first electrode 52 defines a mandrel, which in this embodiment is cylindrical in shape.

The second electrode 54 is coupled to the first electrode 52 in an orientation that is non-orthogonal with respect to the rotational axis MA of the cylindrical first electrode 52. The angle θ can be between 1 and 89 degrees. Thus, the second electrode 54 can wind helically around the first electrode 52 as they zip closed.

A first end of the second electrode 54 is coupled to a structure S1 which is arranged to inhibit movement of the first end along the axis of rotation MA. Zipping closure of the helically wound second electrode 54 drives the first electrode 52 axially in the direction D2 as well as rotationally about MA, as shown in Figure 8. Thus, the first electrode 52 can also be used as a linear extending actuator.

The structure S1 can be arranged to move towards the first electrode 52 in a direction D1 that is orthogonal to the axis of rotation MA such that the axis of rotation MA can be supported by a fixed structure S2 such as a collar which permits the first electrode 52 to rotate about and move along axis of rotation MA.

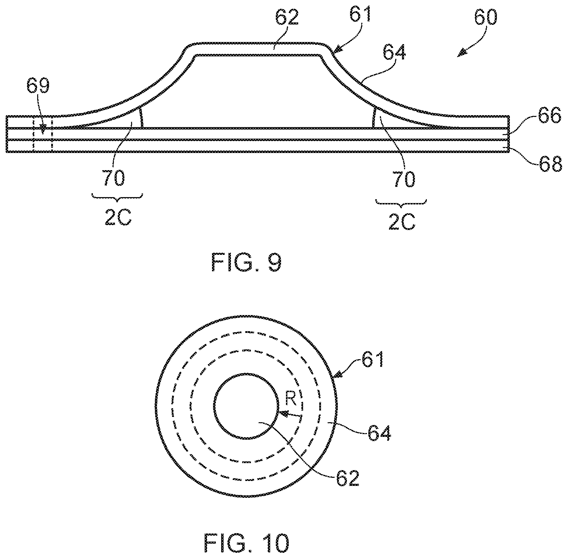

Referring now to Figures 9 and 10, an electrostatic actuator according to a fifth embodiment of the invention is shown generally at 60. The actuator 60 of this embodiment is similar to the actuator 20 of the second embodiment. As such, for brevity, the following description will focus on the differences.

Rather than zipping closed in one dimension, the actuator 60 zips closed in two dimensions. The second electrode 61 is bent to define dome having a top 62, which can be generally planar and circular in shape, surrounded by a skirt region 64 which spaces the top from a planar insulator 66 and first electrode 68. A ring of liquid dielectric 70 is provided within the annular zipping crevice ZC defined by a circular first electrode coupling 69. The first electrode 61 and/or the second electrode 68 can be flexible and/or compressible. Application of a voltage causes the electrodes 62, 68 to zip together in a radial manner. The outer periphery of the skirt region 64 and the underlying insulator 66 and first electrode 68 can be circular, rectangular or the like in shape.

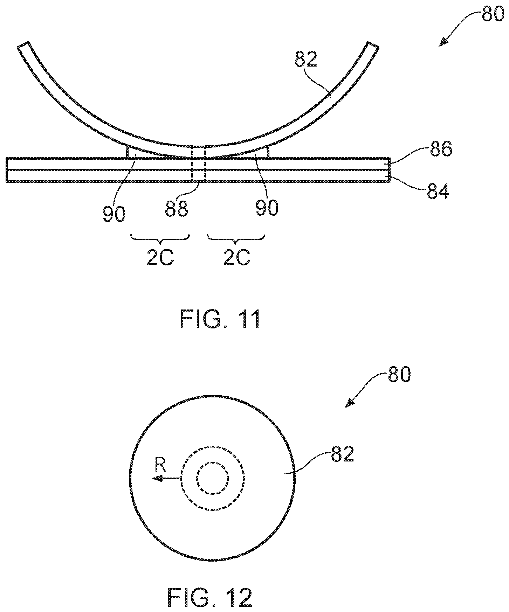

Referring now to Figures 11 and 12, an electrostatic actuator according to a sixth embodiment of the invention is shown generally at 80. The actuator 80 of this embodiment is similar to the actuator 60 of the fifth embodiment. As such, for brevity, the following description will focus on the differences.

The actuator 80 of the sixth embodiment has a bowl shaped second electrode 82 coupled to underlying first electrode 84 and insulator 86 layers via a central electrode coupling 88. A small ring of liquid dielectric 90 is provided within the annular zipping crevice ZC defined around the first electrode coupling 88. Application of a voltage causes the electrodes 82, 84 to zip together in a radial manner. The outer periphery of the actuator 80 can be circular, rectangular or the like in shape.

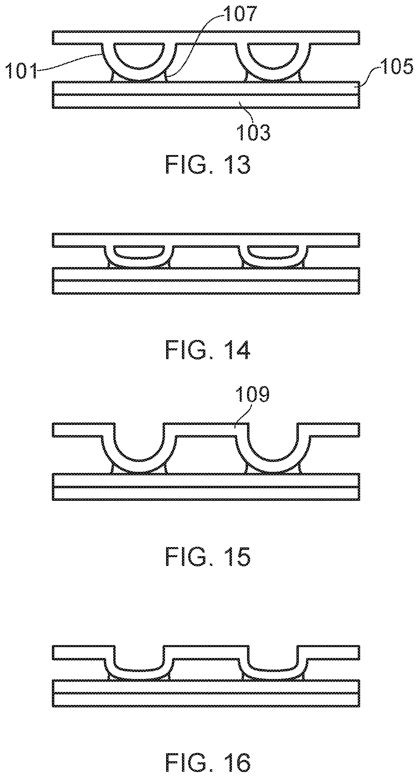

According to seventh and eight embodiments, dome or bowl shaped actuators can be configured in a regular or irregular array, as shown in Figures 13 to 16. In Figure 13, bowl shaped second electrodes regions 101 are adjacent a planar first electrode 103 and separated by planar insulator 105. Application of a voltage causes the bowls to reduce in height as the second electrode zips closed, as shown in Figure 14. Liquid dielectric 107 is provided in each zipping crevice. The tops of the bowls are closed and can have pressure relief holes for pressure equalisation during actuation. Likewise, the bowl shaped second electrodes regions can be open topped as shown in Figures 15 and 16 which enables the second electrode 109 to be formed from a single layer of material. Such embodiments can result in larger deflections at a given voltage in comparison to the corrugated embodiment.

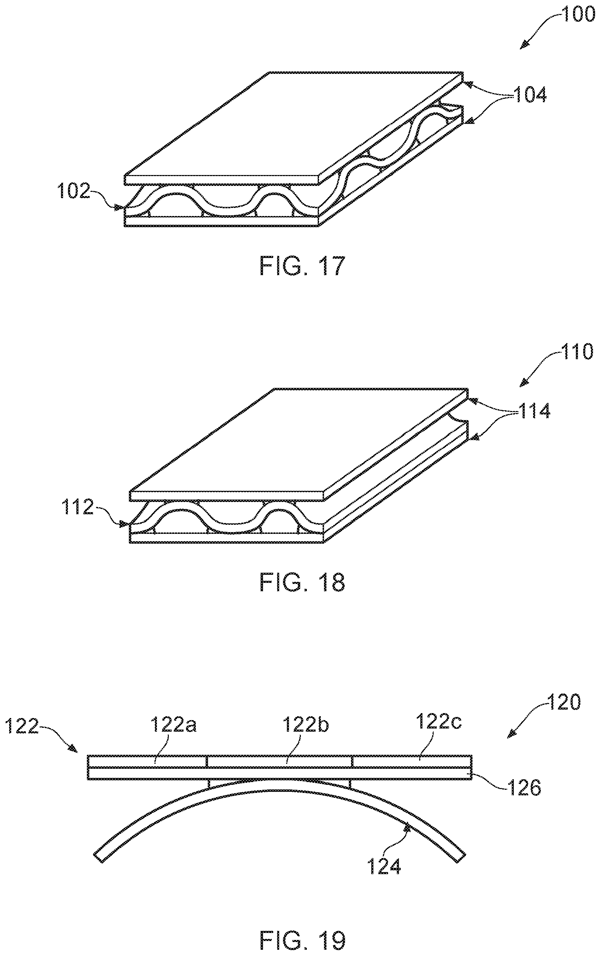

Thus, actuators according to the fifth to eight embodiments can be used to form multilayer actuators 100 as shown in Figure 17, with a flexible and/or compressible undulating electrode 102 sandwiched between planar electrode and insulator layers 104.

Actuators such as the actuator 20 of the second embodiment can be used to form multilayer actuators 110 as shown in Figure 18, with a flexible and/or compressible corrugated electrode 112 sandwiched between planar electrode and insulator layers 114.

In any embodiment of the invention, one or both of the electrodes in an electrode pair can be formed from discrete, electrically isolated sections such as the actuator 120 shown in Figure 19. This enables the electrodes to be selectively zipped together in a zonal manner. In the embodiment show in Figure 19, the first electrode 122 has three independently operable zones 122a, 122b, 122c separated from a single zone second electrode 124 by an insulator 124. Also, the second electrode 124 in this embodiment can be rigid and arcuate so as to rotate when zipping closed. This can be applied to any other embodiment with zonal electrode activation or other means to control the direction of rotation.

In any embodiment of the invention, surface roughness can increase the capacitance of the actuator. Thus, surface roughness or nano/micro patterns of the electrodes and/or insulator can increase the electrostatic closing force.

Actuators according to embodiments of the invention can be easily fabricated using any flexible and/or compressible conductive material and any suitable insulator. Some examples of materials are presented in the table below.

| **Role** | **Material** | **Source** |
|---|---|---|
| Conductor | Carbon steel | 1.1274 carbon steel, h+s Präzisionsfolien GmbH, Germany |
| Conductor | Conductive PLA filament for 3D printing | Conductive Graphene PLA Filament, Black Magic 3D, USA |
| Conductor | Graphite | HB Pencil |
| Insulator | PVC Electrical Insulation Tape | AT7 PVC Electrical Insulation Tape, Advance Tapes, UK |
| Insulator | Polyimide tape | tesa 51408, tesa, Germany |
| Insulator | PLA filament for 3D printing | Natural PLA Filament - 1.75mm, MatterHackers, USA |
| Insulator | Office paper | Lyreco White A4 Paper 80 gsm # 157.796, Lyreco, UK |
| Insulator | Indium tin oxide coated PET | # 639303, Sigma-Aldrich, USA |
| Liquid dielectric | Silicone oil 5 cSt | # 317667, Sigma-Aldrich, USA |
| Liquid dielectric | Silicone oil 50 cSt | # 378356, Sigma-Aldrich, USA |
| Liquid dielectric | Silicone oil 500 cSt | # 378380, Sigma-Aldrich, USA |
| Liquid dielectric | Mineral oil, light | # 330779, Sigma-Aldrich, USA |
| Liquid dielectric | Mineral oil, heavy | # 330760, Sigma-Aldrich, USA |

Actuators according to embodiments of the invention can have electrodes of various dimensions. Some example dimensions of steel ribbon electrodes are presented in the table below. These dimensions apply to ribbons of carbon steel insulated by PVC tape.

| | **Steel strip free length (mm)** | **Steel strip width (mm)** | **Steel strip thickness (µm)** | **Conductor and insulator mass (g)** | **Maximum strain (%)** |
|---|---|---|---|---|---|
| Standard | 100 | 12.7 | 50 | 2.28 | 99.38 |
| High force | 100 | 12.7 | 1000 | 25 | 23.93 |
| High stress | 10 | 12.7 | 100 | 0.9 | 33.91 |
| High strain | 200 | 12.7 | 20 | 2.95 | 99.84 |
| High specific force | 10 | 12.7 | 50 | 0.36 | 17.05 |
| High specific energy | 100 | 12.7 | 50 | 2.28 | 99.38 |
| High specific power | 200 | 12.7 | 50 | 4 | 99.67 |
| Cyclic | 50 | 12.7 | 50 | 1.11 | 97.88 |
| Pre-bent | 70 | 12.7 | 70 | 2.24 | 96.3 |

### EXAMPLES

In a first example, an electronic ribbon actuator made from 100 mm long, 12.7 mm wide, 50 µm thick steel strips and PVC tape lifted a 20 g mass 51.75 mm. The applied voltage was 8 kV. Contractile strain was 99.31 %.

In a second example, during isometric testing of an electronic ribbon actuator made from 100 mm long, 12.7 mm wide, 50 µm thick steel strips and PVC tape actuator, extension was held at 24 mm. The applied voltage was a step input, starting at 1 kV and increasing by 1 kV every five seconds to a maximum voltage of 6 kV resulting in a maximum force of 2.76N.

In a third example, a high strain electronic ribbon actuator made from 200 mm long, 12.7 mm wide, 20 µm thick steel strips and PVC tape lifted a 4 g mass 174.75 mm. The applied voltage was 9 kV. The contractile strain was 99.83 %.

In a fourth example, a high stress electronic ribbon actuator made from 100 mm long, 12.7 mm wide, 500 µm thick steel strips and PVC tape lifted a 410 g mass 1.94 mm. The applied voltage was 9 kV. The contractile strain was 60.64 %.

In further examples, series, parallel and lattice arrangements of steel-PVC bow-shaped electronic ribbon actuators were made from 100 mm long, 12.7 mm wide, 50 µm thick steel strips and PVC tape:
a series arrangement of electronic ribbon actuators lifted a 22 g mass 109.90 mm with an applied voltage of 10 kV;
a parallel arrangement of electronic ribbon actuators lifted a 38 g mass 67.42 mm with an applied voltage of 10 kV; and
a lattice arrangement of electronic ribbon actuators lifted a 26 g mass 107.24 mm with an applied voltage of 10 kV.

In further examples, with bow-shaped electronic ribbon actuators made from varying materials:
an electronic ribbon actuator made from 85 mm long strips of 127 µm thick ITO coated PET lifted a 5 g mass 19.40 mm with applied voltage is 7 kV and contractile strain of 98.71 %;
a 3D printed electronic ribbon actuator made from 100 mm long 12.7 mm wide 0.6 mm thick conductive PLA conductors and a 0.4 mm thick standard PLA insulator lifted a 12 g mass 2.3 mm with an applied voltage of 5 kV and contractile strain of 58.97 %; and
an electronic ribbon actuator made from 140 mm long, 60 mm wide strips of 100 µm thick office paper, with electrodes drawn on in pencil, lifted a 2 g mass 44.61 mm with an applied voltage of 2 kV and contractile strain of 99.56 %.

In a further example, a pre-bent steel-PVC electronic ribbon actuator which does not require pre-strain to permit actuation was made. Two 70 mm long, 12.7 mm wide strips of 70 µm thick steel were bent into a buckled structure by pulling them through a fixed bending radius guide, before being insulated with PVC tape. The direction of bending was alternated to produce a pre-buckled beam profile. The applied voltage was 9 kV. The stroke was 9.80 mm and contractile strain was 95.98 %.

In a further example, a spiral electronic ribbon actuator was made. Two strips of 12.7 mm wide, 50 µm thick steel were insulated with PVC tape and wrapped around an acrylic cylinder. Application of liquid dielectric beads and high voltage (7 kV) caused the electrode ribbons to wrap around one another, creating a tightly bound spiral.

In a further example, an electronic ribbon actuator inspired by spider silk was made. The actuator was inspired by the tension-maintaining spooling of spider silk around liquid droplets. Two strips of 12.7 mm wide, 30 µm thick steel were insulated with PVC tape and wrapped around a circular template. One electrode ribbon end was fixed and liquid dielectric beads were applied to each zipping locus. Application of high voltage (10 kV) caused the actuator to spool around itself, resulting in a large contractile stroke of over 60 cm.

In a further example, a dielectrophoretic liquid zipping actuated origami "artificial muscle" was made. Two strips of 12.7 mm wide, 20 µm thick steel were insulated with PVC tape and alternatively folded over one another. Liquid dielectric was added at each fold. Application of high voltage (7 kV) resulted in contractions exceeding 50 % strain.

In a further example, a dielectrophoretic liquid zipping actuated origami crane was made. An origami crane was fabricated from polyimide and painted with conductive ink electrodes on its wings and inside its body. Application of liquid dielectric and high voltage (8 kV) caused the wings to adhere to the body, resulting in a flapping motion.

In a further example, a cantilever structure was made. Two electrodes were made from 100 mm long, 12.7 mm wide, 70 µm thick steel strips. The lower electrode was deflected by the weight of a test mass. Application of a bead of liquid dielectric and a high voltage (8 kV) caused electrostatic attraction towards an upper electrode, raising the mass.

## Claims

1. An electrostatic actuator comprising:
a first electrode (12);
a second electrode (14), which is flexible or arcuate in shape;
an insulator (16),
the second electrode being coupled to the first electrode via a first coupling so as to define a free portion of the second electrode that can move through a movement volume between a relatively spaced position and a relatively close position with respect to the first electrode as the second electrode flexes or moves due to a voltage applied across the electrodes,
the insulator being arranged to inhibit electrical coupling between the electrodes when the second electrode is in the relatively close position,
the first coupling between the electrodes defining a first zipping crevice (ZC) at a region where the second electrode transitions from being at a first distance from the first electrode defined by the thickness of the insulator to a second distance which is greater than the first distance,
**characterised in that** the actuator further comprises a mobile dielectric (19) located within the first zipping crevice to increase the field force between the electrodes in the region of the first zipping crevice, the mobile dielectric being arranged to be moved with the zipping crevice as it propagates along the actuator due to flexing or movement of the second electrode towards the first electrode.

2. An electrostatic actuator according to claim 1, wherein the mobile dielectric (19) comprises a liquid dielectric.

3. An electrostatic actuator according to claim 2, wherein the liquid dielectric comprises a bead of liquid dielectric provided within the zipping crevice (ZC).

4. An electrostatic actuator according to claim 2 or claim 3, wherein one or each electrode (12, 14) or insulator (16) comprises one or more reservoirs (15) for the liquid dielectric (19) to move into and/or supply liquid dielectric to the zipping locus (ZL) as the second electrode moves from the relatively spaced position towards the relatively close position.

5. An electrostatic actuator according to any preceding claim, wherein the insulator (16) comprises one or more layers of insulating material provided between the electrodes (12, 14).

6. An electrostatic actuator according to claim 5, wherein at least one of the electrodes (12, 14) is encapsulated by the insulator (16) or at least one layer of insulating material is wider than the electrodes in order to inhibit arcing.

7. An electrostatic actuator according to claim 5 or claim 6, wherein the insulating layer(s) are of uniform thickness and/or have straight surfaces to aid in movement of the mobile dielectric (19) within the zipping crevice (ZC) as it propagates along the actuator.

8. An electrostatic actuator according to any preceding claim, wherein the second electrode (14) is shaped to define one or more annular zipping crevices which zip radially inwardly or outwardly in response to an applied voltage.

9. An electrostatic actuator according to any of claims 1 to 7, wherein the first (12) and/or second (14) electrodes are plates having flat major surfaces joined by minor sidewalls and end walls.

10. An electrostatic actuator according to any preceding claim, wherein one or more of the electrodes (122, 124) is partitioned into a plurality of electrically isolated zones (122a, 122b, 122c) which can be selectively powered to attract the energised zones to the opposing electrode.

11. An electrostatic actuator according to any preceding claim, wherein the first electrode (12) is formed from a flexible material.

12. An electrostatic actuator according to any preceding claim, the second electrode (14) is coupled to the first electrode (12) via a second coupling (22), the second coupling defining a second zipping crevice at a region where the second electrode transitions from being at the first distance from the first electrode defined by the thickness of the insulator (16) to the second distance which is greater than the first distance, wherein the actuator further comprises a second mobile dielectric located within the second zipping crevice to increase the field force between the electrodes in the region of the second zipping crevice, the second mobile dielectric being arranged to be moved with the second zipping crevice as it propagates along the actuator due to flexing of the second electrode towards the first electrode.

13. An electrostatic actuator according to claim 12, wherein the second coupling is located so as to define the free portion (F2) of the second electrode (34) between the first and second electrode couplings (42, 44) or,
wherein the actuator further comprises a mandrel region (40) located between the first and second electrode couplings (42, 44) with the first electrode (32) extending around one side of the mandrel and the second electrode (34) extending around the opposite side of the mandrel, with the first and second electrode couplings being between the free portions (F1, F2) of the first and second electrodes.

14. An electrostatic actuator according to any of claims 1 to 11, wherein the first electrode (32) is shaped to define a mandrel (40) having an axis of rotation and the second electrode (34) is coupled to the mandrel in an orientation such that the longitudinal axis of the second electrode is non-parallel and can be non orthogonal with respect to the axis of rotation (MA).

15. An assembly or multi-layer actuator comprising a plurality of actuators according to any preceding claim arranged in series and/or parallel.

## Patentansprüche

1. Elektrostatischer Aktuator, umfassend:
eine erste Elektrode (12);
eine zweite Elektrode (14), die flexibel oder bogenförmig ausgebildet ist;
einen Isolator (16),
wobei die zweite Elektrode über eine erste Kopplung mit der ersten Elektrode verbunden ist, um einen freien Teil der zweiten Elektrode zu definieren, der sich über ein Bewegungsvolumen zwischen einer relativ beabstandeten Position und einer relativ nahen Position in Bezug auf die erste Elektrode bewegen kann, wenn sich die zweite Elektrode aufgrund einer an die Elektroden angelegten Spannung biegt oder bewegt,
wobei der Isolator so angeordnet ist, dass er eine elektrische Kopplung zwischen den Elektroden verhindert, wenn sich die zweite Elektrode in der relativ nahen Position befindet;
wobei die erste Kopplung zwischen den Elektroden, die einen ersten Reißverschlussspalt (ZC) in einem Bereich definiert, wo die zweite Elektrode von einem ersten Abstand von der ersten Elektrode, der durch die Dicke des Isolators definiert ist, zu einem zweiten Abstand übergeht, der größer als der erste Abstand ist,
**dadurch gekennzeichnet, dass** der Aktuator ferner ein mobiles Dielektrikum (19) umfasst, das sich innerhalb des ersten Reißverschlussspaltes befindet, um die Feldkraft zwischen den Elektroden in dem Bereich des ersten Reißverschlussspaltes zu verstärken, wobei das bewegliche Dielektrikum so angeordnet ist, dass es mit dem Reißverschlussspalt bewegt wird, wenn es sich entlang des Aktuators aufgrund der Biegung oder Bewegung der zweiten Elektrode in Richtung auf die erste Elektrode ausbreitet.

2. Elektrostatischer Aktuator nach Anspruch 1, wobei das mobile Dielektrikum (19) ein flüssiges Dielektrikum umfasst.

3. Elektrostatischer Aktuators nach Anspruch 2, wobei das flüssige Dielektrikum einen Tropfen aus flüssigem Dielektrikum umfasst, das in der Reißverschlussspalte (ZC) vorgesehen ist.

4. Elektrostatischer Aktuator nach Anspruch 2 oder Anspruch 3, wobei eine oder jede Elektrode (12, 14) oder der Isolator (16) ein oder mehrere Reservoire (15) für das flüssige Dielektrikum (19) umfasst, in das sich das flüssige Dielektrikum einführen und/oder dem Ort (ZL) des Reißverschlusses zuführen lässt, wenn sich die zweite Elektrode aus der relativ beabstandeten Position in Richtung auf die relativ nahe Position bewegt.

5. Elektrostatischer Aktuator nach einem der vorhergehenden Ansprüche, wobei der Isolator (16) eine oder mehrere Schichten aus isolierendem Material umfasst, die zwischen den Elektroden (12, 14) vorgesehen sind.

6. Elektrostatischer Aktuator nach Anspruch 5, wobei mindestens eine der Elektroden (12, 14) von dem Isolator (16) umschlossen ist oder wobei mindestens eine Schicht aus dem isolierenden Material breiter ist als die Elektroden, um eine Lichtbogenbildung zu verhindern.

7. Elektrostatischer Aktuator nach Anspruch 5 oder Anspruch 6, wobei die Isolierschicht bzw. die Isolierschichten eine gleichmäßige Dicke und/oder eine glatte Oberfläche aufweisen, um die Bewegung des mobilen Dielektrikums (19) innerhalb des Reißverschlussspaltes (ZC) zu unterstützen, wenn es sich entlang des Aktuators ausbreitet.

8. Elektrostatischer Aktuator nach einem der vorhergehenden Ansprüche, wobei die zweite Elektrode (14) so geformt ist, dass sie einen oder mehrere ringförmige Reißverschlussspalte definiert, die als Reaktion auf eine angelegte Spannung radial nach innen schließen oder nach außen öffnen.

9. Elektrostatischer Aktuator nach einem der Ansprüche 1 bis 7, wobei die erste Elektrode (12) und/oder die zweite Elektrode (14) als Platten mit flachen Hauptflächen ausgebildet sind, die durch kleinere Seitenwände und Stirnwände verbunden sind.

10. Elektrostatischer Aktuator nach einem der vorhergehenden Ansprüche, wobei eine Elektrode oder mehrere der Elektroden (122, 124) in mehrere elektrisch isolierte Zonen (122a, 122b, 122c) unterteilt sind, die selektiv mit Strom versorgt werden können, um die unter Spannung stehenden Zonen zur gegenüberliegenden Elektrode anzuziehen.

11. Elektrostatischer Aktuator nach einem der vorhergehenden Ansprüche, wobei die erste Elektrode (12) aus einem flexiblen Material gebildet ist.

12. Elektrostatischer Aktuator nach einem der vorhergehenden Ansprüche, wobei die zweite Elektrode (14) über eine zweite Kopplung (22) mit der ersten Elektrode (12) gekoppelt ist, wobei die zweite Kopplung einen zweiten Reißverschlussspalt in einem Bereich definiert, in dem die zweite Elektrode von dem ersten Abstand von der ersten Elektrode, der durch die Dicke des Isolators (16) definiert ist, zu dem zweiten Abstand übergeht, der größer als der erste Abstand ist, wobei der Aktuator ferner ein zweites mobiles Dielektrikum umfasst, das sich innerhalb des zweiten Reißverschlussspaltes befindet, um die Feldkraft zwischen den Elektroden im Bereich des zweiten Reißverschlussspaltes zu erhöhen, wobei das zweite mobile Dielektrikum so angeordnet ist, um mit dem zweiten Reißverschlussspalt bewegt zu werden, wenn er sich entlang des Aktuators aufgrund der Biegung der zweiten Elektrode in Richtung der ersten Elektrode ausbreitet.

13. Elektrostatischer Aktuator nach Anspruch 12, wobei die zweite Kopplung so angeordnet ist, um den freien Abschnitt (F2) der zweiten Elektrode (34) zwischen der ersten und der zweiten Elektrodenkopplung (42, 44) zu definieren, oder
wobei der Aktuator ferner einen Dornbereich (40) umfasst, der zwischen der ersten und der zweiten Elektrodenkopplung (42, 44) angeordnet ist, wobei die erste Elektrode (32) sich um eine Seite des Dorns erstreckt und die zweite Elektrode (34) sich um die gegenüberliegende Seite des Dorns erstreckt, wobei sich die erste und die zweite Elektrodenkopplung zwischen den freien Abschnitten (F1, F2) der ersten und der zweiten Elektrode befinden.

14. Elektrostatischer Aktuator nach einem der Ansprüche 1 bis 11, wobei die erste Elektrode (32) so geformt ist, dass sie einen Dorn (40) mit einer Drehachse definiert, und wobei die zweite Elektrode (34) mit dem Dorn in einer solchen Ausrichtung verbunden ist, dass die Längsachse der zweiten Elektrode nicht parallel ist und in Bezug auf die Rotationsachse nicht orthogonal sein kann.

15. Anordnung oder mehrschichtiger Aktuator mit einer Vielzahl von Aktuatoren gemäß einem vorhergehenden Anspruch, die in Serie und/oder parallel angeordnet sind.

## Revendications

1. Actionneur électrostatique comprenant :
- une première électrode (12),
- une seconde électrode (14) flexible ou de forme courbe,
- un isolant (16),
- la seconde électrode étant couplée à la première électrode par un premier couplage de façon à laisser une partie libre, la seconde électrode pouvant se déplacer par un mouvement de volume entre une position relativement espacée et une position relativement proche par rapport à la première électrode lorsque la seconde électrode fléchit ou se déplace sous l'effet d'une tension appliquée entre les électrodes,
- l'isolant étant disposé pour interdire le couplage électrique entre les électrodes lorsque la seconde électrode est dans une position relativement proche,
- le premier couplage entre les électrodes définissant une première crevasse de fermeture glissante (ZC) dans une région dans laquelle la seconde électrode transite entre une première distance par rapport à la première électrode définie par l'épaisseur de l'isolant et une seconde distance plus grande que la première distance,
actionneur **caractérisé en ce qu'**il comprenant en outre :
un diélectrique mobile (19) mis dans la première crevasse de fermeture glissante pour augmenter la force du champ entre les électrodes dans la région de la première crevasse de fermeture glissante, le diélectrique mobile étant disposé pour bouger avec la crevasse de fermeture glissante, se déplaçant le long de l'actionneur sous l'effet de la flexion ou du mouvement de la seconde électrode vers la première électrode.

2. Actionneur électrostatique selon la revendication 1,
dans lequel
le diélectrique mobile (19) comprend un liquide de diélectrique.

3. Actionneur électrostatique selon la revendication 2,
dans lequel
le liquide diélectrique comprend une goutte de liquide diélectrique mise dans la crevasse de fermeture glissante (ZC).

4. Actionneur électrostatique selon la revendication 2 ou la revendication 3,
dans lequel
une ou chaque électrode (12,14) ou isolant (16) comprend un ou plusieurs réservoirs (15) pour le liquide diélectrique (19), pour se déplacer dans/ou fournir le liquide diélectrique à la région de fermeture glissante (ZL) lorsque la seconde électrode se déplace de la position relativement espacée vers la position relativement proche.

5. Actionneur électrostatique selon l'une quelconque des revendications précédentes,
dans lequel
l'isolant (16) se compose d'une ou plusieurs couches de matière isolante mises entre les électrodes (12, 14).

6. Actionneur électrostatique selon la revendication 5,
dans lequel
au moins l'une des électrodes (12, 14) étant capsulée par l'isolant (16) ou au moins une couche de matière isolante est plus grande que les électrodes pour interdire le phénomène d'arc.

7. Actionneur électrostatique selon la revendication 5 ou la revendication 6,
dans lequel
les couches isolantes ont une épaisseur uniforme et/ou des surfaces droites pour faciliter le mouvement du diélectrique mobile (19) dans la crevasse de fermeture glissante (ZC) lorsqu'il se déploie le long de l'actionneur.

8. Actionneur électrostatique selon l'une quelconque des revendications précédentes,
dans lequel
la seconde électrode (14) a une forme définissant une ou plusieurs crevasses annulaires de fermeture glissante qui se ferment en glissant radialement vers l'intérieur ou vers l'extérieur selon la tension appliquée.

9. Actionneur électrostatique selon l'une quelconque des revendications 1 à 7,
dans lequel
la première électrode (12) et/ou la seconde électrode (14) sont des plaques ayant des surfaces principales planes réunies par de petites parois latérales et les parois de l'extrémité.

10. Actionneur électrostatique selon l'une quelconque des revendications précédentes,
dans lequel
une ou plusieurs électrodes (122, 124) sont cloisonnées en un ensemble de zones isolées électriquement (122a, 122b, 122c) alimentées sélectivement pour attirer vers l'électrode opposée les zones alimentées en énergie.

11. Actionneur électrostatique selon l'une quelconque des revendications précédentes,
dans lequel
la première électrode (12) est en un matériau souple.

12. Actionneur électrostatique selon l'une quelconque des revendications précédentes,
dans lequel
la seconde électrode (14) est couplée à la première électrode (2) par un second couplage (22), ce second couplage (22) formant une seconde crevasse de fermeture glissante dans une région dans laquelle la seconde électrode passe d'une première distance par rapport à la première électrode définie par l'épaisseur de l'isolant (16) à une seconde distance plus grande que la première distance,
- l'actionneur comprenant en outre un second diélectrique mobile dans la seconde crevasse de fermeture glissante pour augmenter la force du champ entre les électrodes dans la région de la seconde crevasse de fermeture glissante, le second diélectrique mobile étant disposé pour se déplacer dans la seconde crevasse de fermeture glissante se déployant le long de l'actionneur sous l'effet du fléchissement de la seconde électrode vers la première électrode.

13. Actionneur électrostatique selon la revendication 12,
dans lequel
le second couplage est situé de façon à définir la partie libre (F2) de la seconde électrode (34) entre la première et la seconde électrode de couplage (42,44), ou
l'actionneur comprend en outre une région de mandrin (40) entre les couplages (42, 44) entre la première et la seconde électrode, la première électrode (32) entourant un côté du mandrin et la seconde électrode (34) entourant le côté opposé du mandrin, les couplages de la première et la seconde électrode étant entre les parties libres (F1, F2) de la première et la seconde électrode.

14. Actionneur électrostatique selon l'une quelconque des revendications 1 à 11,
dans lequel
la première électrode (32) a une forme définissant un mandrin (40) ayant un axe de rotation et la seconde électrode (34) est couplée au mandrin dans une orientation telle que l'axe longitudinal de la seconde électrode n'est pas parallèle et peut être non orthogonal par rapport à l'axe de rotation (MA).

15. Assemblage ou actionneur multi-couches comprenant plusieurs actionneurs selon l'une quelconque des revendications précédentes, montés en série et/en parallèle.
